# EUROPEAN PATENT SPECIFICATION

(11) **EP 1 319 821 B1**
(45) Date of publication and mention of the grant of the patent: **07.10.2009**
(21) Application number: 02027721.6
(22) Date of filing: 10.12.2002
(51) Int. Cl.: F02D 41/38, F02D 41/06, F02M 63/02, F02M 31/16, F02M 37/22

(54) **Fuel injection system having fuel recirculating structure**
Kraftstoffeinspritzsystem mit einer Struktur zur Kraftstoffrückführung
Système d'injection de carburant à structure de retour de carburant

(30) Priority: 11.12.2001 JP 2001377098
(43) Date of publication of application: 18.06.2003
(73) Proprietor: DENSO CORPORATION, Kariya-city, Aichi-pref. 448-8661 (JP)
(72) Inventor: Osaki, Masatoyo, Kariya-city, Aichi-pref., 448-8661 (JP)
(74) Representative: TBK-Patent

(56) References cited:
- DE-A1- 19 857 260
- DE-C1- 19 714 488
- JP-A- 57 131 858

## Description

The present invention relates to a fuel injection system having a return fuel recirculating type fuel filter that recirculates return fuel into the fuel filter. Specifically, the present invention relates to an accumulation type fuel injection system having a pressure reducing valve that is disposed in an accumulator and reduces fuel pressure corresponding to fuel injection pressure, wherein the accumulator accumulates high-pressure fuel discharged by a fuel supply pump and distributes the accumulated high-pressure fuel to fuel injection valves mounted in respective cylinders of an internal combustion engine.

Conventionally, an accumulation type fuel injection system having an accumulator, fuel injection valves and a supply pump is proposed in Japanese Patent Laid-Open Publication No. 2000-282929 and Publication No. 2001-82230 for instance. The accumulator accumulates fuel at a high pressure corresponding to a fuel injection pressure. The fuel injection valve injects the high-pressure fuel in the accumulator into a cylinder of an internal combustion engine. The supply pump pressurizes the fuel drawn into a pressurization chamber through an intake control valve and pressure-feeds the high-pressure fuel to the accumulator. The accumulation type fuel injection system has a pressure reducing valve in the end of the accumulator. The pressure reducing valve has a superior pressure-reducing performance to reduce the common rail pressure, the pressure in the common rail. The pressure reducing valve quickly reduces the common rail pressure in a decelerating operation and the like by opening a fuel recirculating passage, a low-pressure piping, which connects the accumulator with a fuel tank.

Fuel such as diesel oil has a characteristic that wax precipitates out of the fuel in the low temperature. Therefore, preferably, a return fuel recirculating type fuel filter should be used as a fuel filter for preventing extraneous matters from entering the fuel to the supply pump. The return fuel is the fuel that is not consumed in the engine and is recirculated to the fuel tank and the like, and the return fuel recirculating type fuel filter recirculates the return fuel into the fuel filter. The temperature of the fuel is increased because part of energy for pressurizing the fuel is converted to heat energy. Fluidity of the fuel is maintained even in the low temperature by employing the return fuel recirculating type fuel filter and preventing the clogging of the filter made of metal, plastic or paper, by the wax precipitated in the low temperature.

However, even if the return fuel recirculating type fuel filter is applied to the conventional accumulation type fuel injection system, the wax precipitates out of the fuel during the engine starting operation or the idling operation in the low temperature, depending on the type of the fuel. The filter may clog and the fluidity of the fuel may be reduced especially right after the cranking of the engine. The inhibition of the fuel fluidity causes abnormality in performance of fuel injection from the fuel injection valves to the cylinders of the engine and generates rough idling such as fluctuation in idling rotation speed, and noise in the engine. In addition, if the fuel filter clogs and the fluidity of the fuel is reduced, the rotation speed may decrease and the engine may stall.

Document DE 197 14 488 Cl describes a fuel injection system provided with a common rail system having a controlled pressure reducing valve reducing the fuel pressure in the common rail. The injection valve of the system has a leakage passage which, together with the outlet passage of the pressure reducing valve, leads to a switch valve which, in a first position, leads the fuel into a fuel passage upstream of the fuel pump and, thus, directly leads the fuel pump back into the common rail. In a second position, the valve releases the fuel into the fuel tank. Under low temperature conditions it is intended to release more pressurized fuel from the common rail by the valve and the injector leakage passage into the fuel passage upstream of the fuel pump, or the fuel tank increases the temperature of the fuel. This shall be achieved by increasing the amount of fuel delivered by the fuel pump.

It is therefore the object of the present invention to provide a fuel injection system that effectively increases quantity of the return fuel recirculated into the fuel filter when the fuel temperature is low, in order to prevent a fuel filter from clogging by wax precipitated out of the fuel.

This object is solved by the features of claim 1.

According to an aspect of the present invention, a fuel injection system has a fuel recirculating passage for recirculating the fuel discharged by a fuel supply pump into a fuel filter and has a recirculation quantity increasing means for increasing the quantity of the fuel flowing through the fuel recirculating passage when the temperature of the fuel drawn into the supply pump is lower than a predetermined temperature.

Thus, the temperature of the fuel passing through the fuel filter and the fuel filter itself is increased quickly, because the return fuel has heat energy converted from the energy for pressurizing the fuel. Therefore, precipitation of the wax in the fuel flowing into the fuel filter is prevented.

Accordingly, the fluidity of the fuel passing through the fuel filter is increased and the clogging of the fuel filter by the wax precipitated in the fuel is prevented. As a result, the fluidity of the fuel is maintained, preventing the engine stall and the decrease of the rotation speed.

Features and advantages of an embodiment will be appreciated, as well as methods of operation and the function of the related parts, from a study of the following detailed description, the appended claims, and the drawings, all of which form a part of this application. In the drawings:
FIG. 1 is a schematic diagram showing an entire construction of a common rail type fuel injection system according to an embodiment of the present invention;
FIG. 2A is a first-dimensional map showing a characteristic of a command duty ratio R_{C} to a pressure reducing valve with respect to pump fuel temperature THF of a supply pump, according to the embodiment of the present invention;
FIG 2B is a chart for complementing the first-dimensional map in FIG. 2A, according to the embodiment of the present invention; and
FIG. 3 is a flow chart showing a driving method of the pressure reducing valve according to the embodiment of the present invention.

A common rail type fuel injection system according to the embodiment has an accumulator 1, or a common rail 1, a plurality of, four in the embodiment, injectors 4, a supply pump 3 and an electronic control unit (ECU) 10. The common rail 1 provides an accumulator chamber for accumulating the fuel at a high pressure corresponding to fuel injection pressure for injecting fuel into cylinders of an internal combustion engine. Each injector 2 is connected to the common rail 1 and injects the fuel into each cylinder of the engine. The supply pump 3 is driven to rotate by the engine. The ECU 10 electronically controls the plurality of injectors 2 and the supply pump 3.

The common rail 1 has to continuously accumulate high pressure corresponding to the fuel injection pressure. Therefore, the supply pump 3 supplies the high-pressure fuel into the common rail 1 through a high-pressure passage 11. The common rail 1 has a normally-closed type pressure reducing valve 6 for opening and closing a fuel recirculating passage 16 leading to low-pressure passages 14, 15 connected with a fuel tank 5. The pressure reducing valve 6 is an electromagnetic valve having a superior pressure-reducing performance to reduce common rail pressure, pressure in the common rail 1. The pressure reducing valve 6 is electronically controlled by a pressure reducing valve driving signal from the ECU 10 and is capable of reducing the common rail pressure quickly in decelerating operation, for instance.

The injector 2 is an electromagnetic valve that has a fuel injection nozzle, an electromagnetic actuator, a biasing means such as a spring, and the like. The fuel injection nozzle is connected with a lower end of one of high-pressure passages 12 branching from the common rail 1 and injects the fuel into the cylinder of the engine. The electromagnetic actuator drives a nozzle needle disposed in the fuel injection nozzle in an opening direction. The biasing means biases the nozzle needle in a closing direction. The fuel injection from each injector 2 to the engine is electronically controlled by turning on and off of the energization to an injection controlling electromagnetic valve 4, which operates as an electromagnetic actuator for controlling back pressure of the nozzle needle. More specifically, the high-pressure fuel accumulated in the common rail 1 is injected into each cylinder of the engine while the injection controlling valve 4 of the injector 2 of the cylinder is open.

The supply pump 3 has a commonly known feed pump, or a low-pressure supply pump, a plunger and a pressurizing chamber, or a plunger chamber. The feed pump draws low-pressure fuel from the fuel tank 5 by rotation of a pump-driving shaft rotating with the crankshaft of the engine. The plunger is driven by the pump-driving shaft. The pressurizing chamber pressurizes the fuel by reciprocation of the plunger. The supply pump 3 is a high-pressure fuel supply pump that pressurize the low-pressure fuel drawn by the feed pump from the fuel tank 5 through a filter 9 and pressure-feeds the fuel to the common rail 1 through the high-pressure passage 11.

A pump electromagnetic valve 7 is disposed in an inlet of a fuel passage leading to the pressurizing chamber of the supply pump 3. The pump electromagnetic valve 7 operates as an electromagnetic actuator that changes quantity of the fuel discharged from the supply pump 3 to the common rail 1 by opening and closing the inlet passage. The quantity of the fuel discharged from the supply pump 3 to the common rail 1 is referred to as pump discharging quantity, hereafter. The pump electromagnetic valve 7 is an intake control valve that is electronically controlled by a pump-driving signal from the ECU 10 and controls the quantity of the fuel drawn into the pressurizing chamber of the supply pump 3. The pump electromagnetic valve 7 controls the common rail pressure by changing the pump discharging quantity.

The pump electromagnetic valve 7 is driven in a direction to increase its opening degree and the pump discharging quantity as a pump-driving signal, pump-driving current, from the ECU 10 increases. The leak fuel, or the return fuel from the injector 2 and the supply pump 3, is returned to the fuel tank 5 through the low-pressure passages 13, 14, 15.

The fuel filter 9 removes solid matters such as dust, and water included in the fuel supplied to the engine in order to prevent mechanical friction and rusting in sliding portions of the injector 2, the supply pump 3 and the like and to ensure the sustainability and the stable operation of the engine. If the fuel, such as diesel fuel, that is not suitable for the air temperature is used, large quantity of wax precipitates out of the fuel. In such a case, the filter of the fuel filter 9 clogs and the fluidity of the fuel decreases. As a result, the engine may stall. Therefore, a return fuel recirculating type fuel filter is employed as the fuel filter 9. The return fuel recirculating type fuel filter 9 has a function to maintain the fluidity of the fuel even in the low temperature. In this construction, the return fuel is recirculated to the inlet of the fuel filter 9 through the fuel recirculating passage 17 branching from the low-pressure passage 15.

The first fuel recirculating passage leads from the pressure reducing valve 6 to the fuel tank 5 through the fuel recirculating passages 16 and the low-pressure passages 14, 15. The second fuel recirculating passage leads from the pressure reducing valve 6 to the inlet of the fuel filter 9 through the fuel recirculating passage 16, the low-pressure passages 14, 15 and the fuel recirculating passage 17. The return fuel is recirculated through the first fuel recirculating passage or the second fuel recirculating passage.

A temperature-actuated recirculating passage switching valve 8 is disposed in a branching point where the fuel recirculating passage 17 branches from the low-pressure passage 15. The switching valve 8 switches the fuel recirculating passage from the first fuel recirculating passage to the second fuel recirculating passage when the temperature of the fuel flowing into the switching valve 8 is lower than a predetermined temperature T_{S}, for instance, 40 degrees centigrade. On the contrary, the switching valve 8 switches the fuel recirculating passage from the second fuel recirculating passage to the first fuel recirculating passage when the temperature of the fuel flowing into the switching valve 8 is above the predetermined temperature T_{S}.

The ECU 10 has a microcomputer with a known construction. The microcomputer has functions of a CPU for performing control processing and calculation processing, a storage device such as a ROM and a RAM for storing various programs and data, an input circuit, an output circuit, a power supply circuit, a pump driving circuit and the like. Sensor signals outputted from the various sensors are inputted to the microcomputer after the signals are converted from analog signals to digital signals by an A/D converter.

The ECU 10 has an injection quantity and timing controlling means for controlling the quantity and timing of the fuel injection of the injectors 2. The injection quantity and timing controlling means has an injection quantity and timing calculating means, an injection pulse width calculating means and an injector driving means. The injection quantity and timing calculating means calculates optimum injection timing and a target injection quantity, or an injection period, in accordance with operating conditions of the engine. The injection pulse width calculating means calculates an injector injection pulse having an injection pulse period, or an injection pulse width, in accordance with the operating conditions of the engine and the target injection quantity. The injector driving means applies the injector injection pulse to the injection controlling valve 4 of the injector 2 through an injector driving circuit 19 (EDU).

The ECU 10 calculates the target injection quantity based on information on the operating conditions of the engine, such as the engine rotation speed detected by an engine rotation speed sensor 21 and accelerator position detected by an accelerator position sensor 22, with the correction corresponding to engine cooling water temperature detected by a cooling water temperature sensor 23 added to the calculation. The rotation speed of the engine is referred to as the engine rotation number NE, hereafter. The ECU 10 applies the injector injection pulse to the injection controlling valve 4 of the injector 2 in accordance with the injection pulse period calculated from the common rail pressure detected by a common rail pressure sensor 25 and the target injection quantity. Thus, the engine is operated.

The ECU 10 has a pump discharging quantity controlling means that calculates the optimum common rail pressure corresponding to the fuel injection pressure in accordance with the operating conditions of the engine, and drives the pump electromagnetic valve 7 of the supply pump 3. The ECU 10 calculates the target common rail pressure based on the information on the operating conditions of the engine, such as the engine rotation number NE and the accelerator position, with the correction corresponding to the engine cooling water temperature added to the calculation. The ECU 10 outputs the pump driving signal to the pump electromagnetic valve 7 in order to attain the target common rail pressure.

More preferably, aiming to improve the fuel injection accuracy, the pump-driving signal to the pump electromagnetic valve 7 should be feedback-controlled so that the actual common rail pressure generally equals the target common rail pressure set based on the operating conditions of the engine. Thus, the actual common rail pressure is not decreased below the target common rail pressure even when the pressure reducing valve 6 is opened during the, engine starting operation or the idling operation in the low temperature. And therefore, the actual quantity of fuel injection is not decreased below the target quantity of the fuel injection set based on the operating conditions of the engine.

Preferably, the driving signal to the pump electromagnetic valve 7 should be controlled in a duty cycle control. A precise digital control is achieved by employing the duty cycle control in which the opening degree of the pump electromagnetic valve 7 is changed by regulating on-off ratio of the pump-driving signal per unit time, that is, energization period ratio or duty ratio.

The target injection quantity, the injection timing, and the target common rail pressure are calculated by using the rotation speed sensor 21, the accelerator position sensor 22 and the cooling water temperature sensor 23. The target injection quantity, the injection timing, and the target common rail pressure may be corrected by the temperature of the fuel drawn into the supply pump 3, or the pump fuel temperature THF, detected by a fuel temperature sensor 24, or detection signals outputted from other kinds of sensors, such as a suction temperature sensor, a suction pressure sensor, a cylinder determination sensor and an injection timing sensor.

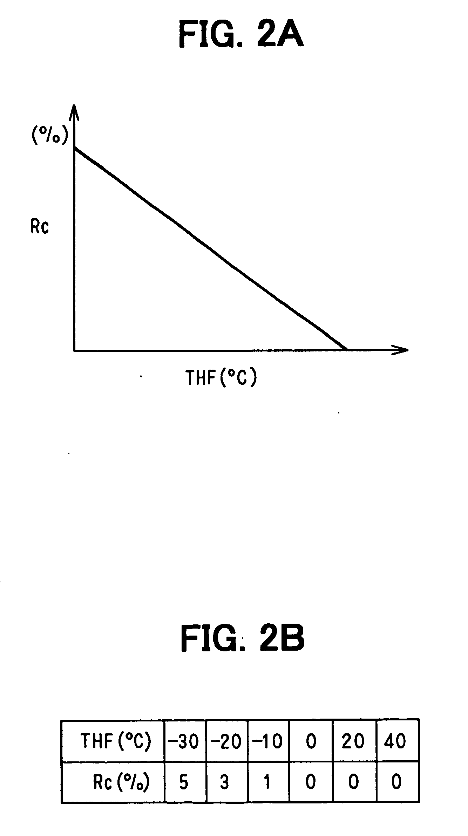

The ECU 10 outputs the pressure reducing valve driving signal, driving current, to open the pressure reducing valve 6 during the decelerating operation or when the engine is stopped. As shown in FIGS. 2A and 2B, the ECU 10 calculates the optimum pressure reducing valve driving signal in accordance with the pump fuel temperature THF and outputs the calculated pressure reducing valve driving signal to the pressure reducing valve 6. Preferably, the driving current to the pressure reducing valve 6 should be controlled in a duty cycle control. A precise digital control is achieved by employing the duty cycle control in which opening degree of the pressure reducing valve 6 is changed by regulating on-off ratio of the pressure reducing valve driving signal per unit time, or energization period ratio, duty ratio or command duty ratio R_{C}.

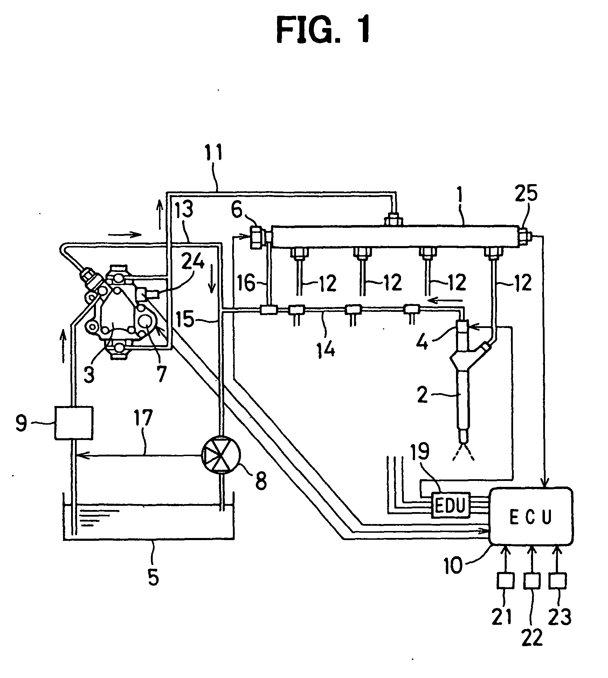

Next, an operating method of the pressure reducing valve 6 of the embodiment is explained based on FIGS. 1 to 3.

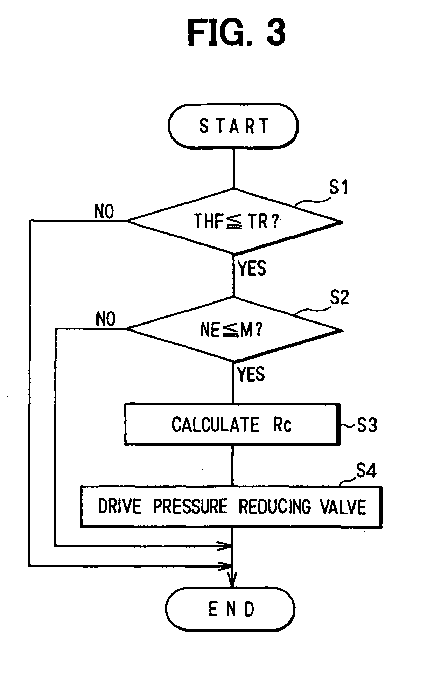

If an ignition switch is turned on, a routine shown in FIG. 3 starts. The routine in FIG. 3 is repeated in a predetermined time interval after the ignition. Engine parameters are inputted from sensors such as the rotation speed sensor 21, the accelerator position sensor 22, the cooling water temperature sensor 23 and the fuel temperature sensor 24. Next, low temperature determination is performed. More precisely, it is determined whether the pump fuel temperature THF is equal to or lower than a predetermined temperature T_{R}, for instance, -10 degrees centigrade, or not in step S1. If the result of the determination is "NO", the operation leaves the routine shown in FIG. 3.

If the result of the determination in step S1 is "YES", it is determined whether the rotation number NE detected by the rotation speed sensor 24 is equal to or lower than an idling rotation speed M or not in step S2. If the result of the determination is "NO", the operation leaves the routine in FIG. 3.

If the result of determination in step S2 is "YES", that is, if the engine is starting or idling in the pump fuel temperature THF lower than the predetermined temperature T_{R}, the driving current to the pressure reducing valve 6 or the opening degree of the valve 6 is calculated in accordance with the pump fuel temperature THF. More specifically, as shown in FIGS. 2A and 2B, the command duty ratio R_{C} corresponding to the pump fuel temperature THF is calculated in step S3.

Next, the pressure reducing valve 6 is driven to attain the opening degree set in step S3. More specifically, the command duty ratio R_{C} determined in step S3 is outputted to the pressure reducing valve 6 in step S4. After that, the operation leaves the routine in FIG. 3.

Next, the function of the common rail type fuel injection system of the embodiment is explained based on FIGS. 1 to 3.

If the engine is started, the pump driving shaft of the supply pump 3 rotates with the crankshaft of the engine. Accordingly, the feed pump is operated by the rotation of the pump driving shaft, and the low-pressure fuel is drawn into the pump chamber of the supply pump 3 from the fuel tank 5 through the fuel filter 9. The fuel is pressurized in the pressurizing chamber of the supply pump 3, and the high-pressure fuel is pressure-fed to the common rail 1 through the high-pressure passage 11. The common rail 1 distributes the high-pressure fuel to the injectors 2 mounted in the respective cylinders of the engine. The fuel is injected from the injectors 2 to the respective cylinders of the engine, and the engine rotates.

At that time, if the engine starts or idles in a state in which the temperature THF of the fuel drawn into the pump chamber of the supply pump 3 is lower than the predetermined temperature T_{R}, the pressure reducing valve 6 opens by the opening degree corresponding to the pump fuel temperature THF. Thus, the high-pressure fuel in the common rail 1 reaches the switching valve 8 from the pressure reducing valve 6 through the fuel recirculating passage 16 and the low-pressure passages 14, 15. At that time, the switching valve 8 changes the fuel recirculating passage from the first fuel recirculating passage to the second fuel recirculating passage if the temperature of the fuel flowing through the switching valve 8 is lower than the predetermined temperature T_{S}.

Thus, a part of the fuel, which is pressurized and heated in the pressurizing chamber of the supply pump 3 and is pressure-fed to the common rail 1, is recirculated to the inlet of the fuel filter 9 through the fuel recirculating passage 16, the low-pressure passages 14, 15, the switching valve 8 and the fuel recirculating passage 17. Accordingly, the temperature of the fuel flowing into the fuel filter 9 increases quickly. As a result, the precipitation of the wax out of the fuel flowing into the fuel filter 9 is inhibited and the clogging of the fuel filter 9 by the wax is prevented even when the engine starts or idles in a state in which the pump fuel temperature THF is lower than the predetermined temperature T_{R}.

Therefore, the performance degradation of the fuel injection to the cylinders of the engine is inhibited, wherein the performance degradation of the fuel injection is caused by the clogging of the fuel filter 9 by the wax precipitated during the engine starting operation or the idling operation. In addition, problems such as fluctuation of the idling rotation number and generation of noise in the engine are resolved. Moreover, the engine stall and the decrease of the rotation speed of the engine are prevented.

The pressure reducing valve 6 is driven to increase its opening degree as the pump fuel temperature THF decreases so that the pressure reducing valve 6 is not opened when the pump fuel temperature THF is high and the fluidity of the fuel is high. Thus, the quantity of the return fuel recirculated to the filter 9 is not increased when the fuel temperature is high and the fluidity is high. As a result, when the temperature and the fluidity of the fuel are high, the workload of the supply pump 3 for generally equalizing the actual common rail pressure to the target common rail pressure is reduced.

In the embodiment, the fuel temperature sensor 24 is mounted in the supply pump 3 to detect the temperature of the fuel drawn into the pump chamber of the supply pump 3. Alternatively, a fuel temperature detecting means may also be disposed in the fuel piping and the like between the fuel tank 5 and the plunger chamber, the pressurizing chamber, of the supply pump 3 to detect the temperature of the fuel drawn into the supply pump 3. Instead of the temperature of the fuel drawn into the supply pump 3, surface temperature of the fuel filter 9, surface temperature of the supply pump 3 when the engine is started, temperature of the fuel piping when the engine is started or the air temperature may also be detected. More specifically, the operating method may be implemented based on temperature relevant to the temperature of the fuel drawn into the supply pump 3.

In the embodiment, the intake controlling type pump electromagnetic valve 7, the intake control valve, for regulating the intake quantity of the fuel drawn into the plunger chamber of the supply pump 3 is used. Alternatively, a discharging quantity controlling type pump electromagnetic valve, a discharging quantity control valve, for regulating the quantity of the fuel discharged from the plunger chamber to the common rail 1 may also be applied. In the embodiment, the normally-closed type pump electromagnetic valve 7 that closes fully when the energization to its electromagnetic valve is stopped. Alternatively, a normally-opened type pump electromagnetic valve that opens when the energization to its electromagnetic valve is stopped may also be applied.

In the embodiment, the fuel filter 9 and the switching valve 8 are formed separately. Alternatively, the fuel filter 9 and the switching valve 8 may be formed integrally. In the embodiment, the temperature-actuated recirculating passage switching valve 8 is employed as the recirculating passage switching valve. Alternatively, an electromagnetic recirculating passage switching valve that switches the recirculating passage based on detected fuel temperature may also be applied. Alternatively again, the switching valve 8 may be driven by temperature sensing element such as bimetal.

In the embodiment, the normally-closed type pressure reducing valve 6 is opened during the engine starting operation or the idling operation in the low temperature. Alternatively, the fuel injection system may be constructed so that the normally-opened type pressure reducing valve is opened during the engine starting operation or the idling operation in the low temperature. The pressure reducing valve 6 may be disposed in the high-pressure passage 11 and the like between the plunger chamber of the supply pump 3 and the fuel passage in the injector 2, other than the common rail 1.

In the embodiment, the pressure reducing valve 6 is opened during the engine starting operation or the idling operation in the low temperature. Alternatively, the fuel injection system may be constructed so that an injector driving means may be disposed for applying a fuel disabling pulse, an injector disabling pulse, to the injection controlling valve 4 of the injector 2 during the engine starting operation or the idling operation in the low temperature. The fuel disabling pulse is weaker than a pulse that drives the injection controlling valve 4 to inject the fuel to the cylinder of the engine. Thus, the quantity of the leak fuel recirculated from the control chamber of the injector 2 to the fuel filter 9 is increased during the engine starting operation or the idling operation in the low temperature. As a result, similar effect as in the embodiment is attained.

## Claims

1. A fuel injection system, comprising:
a fuel supply pump (3) that pressurizes drawn fuel and discharges the fuel;
a fuel filter (9) disposed in a fuel passage upstream of the fuel supply pump (3) for removing extraneous matters from the fuel drawn into the fuel supply pump (3);
a fuel recirculating passage (13, 14, 15, 16, 17) for recirculating the fuel discharged by the fuel supply pump (3) into the fuel filter (9);
a recirculation quantity increasing means (2, 4, 6, 8) for increasing the quantity of the fuel flowing through the fuel recirculating passage (13, 14, 15, 16, 17) when the temperature of the fuel drawn into the fuel supply pump (3) is lower than a predetermined temperature, wherein the recirculation quantity increasing means (2, 4, 6, 8) has a valve (4, 6) controlled by an recirculation quantity controlling means (10) for reducing the pressure of the fuel discharged by the fuel supply pump (3), wherein the valve (4, 6) of the recirculation quantity increasing means (2, 4, 6, 8) is opened during the engine starting operation or the idling operation to release the high-pressure fuel into the fuel recirculating passage (16) when the temperature of the fuel drawn into the fuel supply pump (3) is less than the predetermined temperature;
a fuel temperature detecting means (24) for detecting the temperature of the fuel drawn into the fuel supply pump (3); wherein
the driving current to the pressure reducing valve (4, 6) or the opening degree of the valve (4, 6) is calculated in accordance with the fuel temperature detected by the fuel temperature detecting means (24);
wherein the recirculation quantity controlling means (10) controls the valve (4, 6) of the recirculation quantity increasing means (2, 4, 6, 8) such that the recirculation quantity of the fuel flowing through the fuel recirculating passage (13, 14, 15, 16, 17) is increased as the fuel temperature detected by the fuel temperature detecting means (24) decreases.

2. The fuel injection system as in claim 1, wherein:
the pressure reducing valve (6) opens to release the high-pressure fuel into the fuel recirculating passage (16) when the temperature of the fuel drawn into the fuel supply pump (3) is less than the predetermined temperature.

3. The fuel injection system as in claim 1 or 2, wherein:
the recirculation quantity increasing means (2, 4, 6, 8) has a fuel injection valve (2) for injecting the fuel into a cylinder of an internal combustion engine; and
the fuel injection valve (2) releases the high-pressure fuel in the fuel injection valve (2) into the fuel recirculating passage (14) when the temperature of the fuel drawn into the fuel supply pump (3) is lower than the predetermined temperature.

4. The fuel injection system as in claim 3, further comprising:
a first injection valve driving means (10) for applying a fuel injection signal corresponding to a target injection quantity set based on operating conditions of the internal combustion engine to the fuel injection valve (2, 4); and
a second injection valve driving means (10) for applying an injection disabling signal, which is weaker than a signal for injecting the fuel into the cylinder of the engine, to the fuel injection valve (2, 4) when the temperature of the fuel drawn into the fuel supply pump (3) is lower than the predetermined temperature.

5. The fuel injection system as in one of claims 1 to 4,
wherein:
the fuel recirculating passage (13, 14, 15, 16, 17) has a first fuel recirculating passage (13, 14, 15, 16) for recirculating the fuel discharged by the fuel supply pump (3) into a fuel tank (5) and a second fuel recirculating passage (13, 14, 15, 16, 17) for recirculating the fuel discharged by the fuel supply pump (3) into the fuel filter (9); and
the recirculating quantity increasing means (2, 4, 6, 8) has a recirculating passage switching valve (8) that switches the recirculating passage (13, 14, 15, 16, 17) from the first fuel recirculating passage (13, 14, 15, 16) to the second fuel recirculating passage (13, 14, 15, 16, 17) when the temperature of the fuel passing through the recirculating passage switching valve (8) is lower than another predetermined temperature.

6. The fuel injection system as in one of claims 1 to 5,
wherein:
a fuel pressure detecting means (25) for detecting pressure of the fuel discharged by the fuel supply pump (3); and
a pump discharging quantity controlling means (10) for feedback-controlling the quantity of the fuel discharged by the fuel supply pump (3) so that actual fuel pressure detected by the fuel pressure detecting means (25) generally equals target fuel pressure determined based on the operating conditions of the internal combustion engine.

7. The fuel injection system as in claim 2, wherein the pressure reducing valve (6) is opened by an opening degree corresponding to the temperature of the fuel drawn into the fuel supply pump (3).

8. The fuel injection system as in one of claims 1 to 7,
wherein the recirculation quantity increasing means (2, 4, 6, 8) increases the quantity of the fuel flowing through the fuel recirculating passage (13, 14, 15, 16, 17) when a rotation speed of the engine is lower than an idling rotation speed of the engine.

## Patentansprüche

1. Kraftstoffeinspritzsystem mit:
einer Kraftstoffzuführpumpe (3), die angesaugten Kraftstoff mit Druck beaufschlagt und den Kraftstoff abgibt;
einem Kraftstofffilter (9), der in einem Kraftstoffdurchlass stromaufwärts der Kraftstoffzuführpumpe (3) angeordnet ist, um Fremdstoffe von dem in die Kraftstoffzuführpumpe (3) eingesaugten Kraftstoff zu beseitigen;
einem Kraftstoffrückführdurchlass (13, 14, 15, 16, 17) zum Rückführen des durch die Kraftstoffzuführpumpe (3) abgegebenen Kraftstoffs in den Kraftstofffilter (9);
einer Rückführmengenerhöhungseinrichtung (2, 4, 6, 8) zum Erhöhen der Menge des durch den Kraftstoffrückführdurchlass (13, 14, 15, 16, 17) strömenden Kraftstoffs, wenn die Temperatur des in die Kraftstoffzuführpumpe (3) eingesaugten Kraftstoffs niedriger als eine vorbestimmte Temperatur ist, wobei die Rückführmengenerhöhungseinrichtung (2, 4, 6, 8) ein Ventil (4, 6) hat, das durch eine Rückführmengensteuereinrichtung (10) gesteuert wird, um den Druck des durch die Kraftstoffzuführpumpe (3) abgegebenen Kraftstoffs zu reduzieren, wobei das Ventil (4, 6) der Rückführmengenerhöhungseinrichtung (2, 4, 6, 8) während des Kraftmaschinenstartbetriebs oder des Leerlaufbetriebs geöffnet ist, um den Hochdruckkraftstoff in den Kraftstoffrückführdurchlass (16) abzulassen, wenn die Temperatur des in die Kraftstoffzuführpumpe (3) eingesaugten Kraftstoffs niedriger als die vorbestimmte Temperatur ist;
einer Kraftstofftemperaturerfassungseinrichtung (24) zum Erfassen der Temperatur des in die Kraftstoffzuführpumpe (3) eingesaugten Kraftstoffs, wobei
der Antriebsstrom für das Druckverringerungsventil (4, 6) oder der Öffnungsgrad des Ventils (4, 6) in Übereinstimmung mit der durch die Kraftstofftemperaturerfassungseinrichtung (24) erfassten Temperatur berechnet wird;
wobei die Rückführmengensteuereinrichtung (10) das Ventil (4, 6) der Rückführmengenerhöhungseinrichtung (2, 4, 6, 8) derart steuert, dass die Rückführmenge des durch den Kraftstoffrückführdurchlass (13, 14, 15, 16, 17) strömenden Kraftstoffs mit Abnehmen der durch die Kraftstofftemperaturerfassungseinrichtung (24) erfassten Kraftstofftemperatur erhöht wird.

2. Kraftstoffeinspritzsystem gemäß Anspruch 1, wobei
das Druckverringerungsventil (6) öffnet, um den Hochdruckkraftstoff in den Kraftstoffrückführdurchlass (16) abzulassen, wenn die Temperatur des in die Kraftstoffzuführpumpe (3) eingesaugten Kraftstoffs niedriger als die vorbestimmte Temperatur ist.

3. Kraftstoffeinspritzsystem gemäß Anspruch 1 oder 2,
wobei
die Rückführmengenerhöhungseinrichtung (2, 4, 6, 8) ein Kraftstoffeinspritzventil (2) zum Einspritzen des Kraftstoffs in einen Zylinder einer Brennkraftmaschine hat; und
das Kraftstoffeinspritzventil (2) den Hochdruckkraftstoff in dem Kraftstoffeinspritzventil (2) in den Kraftstoffrückführdurchlass (14) ablässt, wenn die Temperatur des in die Kraftstoffzuführpumpe (3) eingesaugten Kraftstoffs niedriger als die vorbestimmte Temperatur ist.

4. Kraftstoffeinspritzsystem gemäß Anspruch 3, ferner mit:
einer ersten Einspritzventilantriebseinrichtung (10) zum Aufbringen eines Kraftstoffeinspritzsignals, das einer Solleinspritzmenge entspricht, die auf Grundlage der Betriebszustände der Brennkraftmaschine festgelegt wird, auf das Kraftstoffeinspritzventil (2, 4); und
einer zweiten Einspritzventilantriebseinrichtung (10) zum Aufbringen eines Einspritzverhinderungssignals, das schwächer als ein Signal zum Einspritzen des Kraftstoffs in den Zylinder der Kraftmaschine ist, auf das Kraftstoffeinspritzventil (2, 4), wenn die Temperatur des in die Kraftstoffzuführpumpe (3) eingesaugten Kraftstoffs niedriger als die vorbestimmte Temperatur ist.

5. Kraftstoffeinspritzsystem gemäß einem der Ansprüche 1 bis 4, wobei
der Kraftstoffrückführdurchlass (13, 14, 15, 16, 17) einen ersten Kraftstoffrückführdurchlass (13, 14, 15, 16) zum Rückführen des durch die Kraftstoffzuführpumpe (3) abgegebenen Kraftstoffs in einen Kraftstofftank (5) und einen zweiten Kraftstoffrückführdurchlass (13, 14, 15, 16, 17) zum Rückführen des durch die Kraftstoffzuführpumpe (3) abgegebenen Kraftstoffs in den Kraftstofffilter (9) hat; und
die Rückführmengenerhöhungseinrichtung (2, 4, 6, 8) ein Rückführdurchlassschaltventil (8) hat, das den Rückführdurchlass (13, 14, 15, 16, 17) von dem ersten Kraftstoffrückführdurchlass (13, 14, 15, 16) auf den zweiten Kraftstoffrückführdurchlass (13, 14, 15, 16, 17) umschaltet, wenn die Temperatur des das Rückführdurchlassschaltventil (8) passierenden Kraftstoffs niedriger als eine andere vorbestimmte Temperatur ist.

6. Kraftstoffeinspritzsystem gemäß einem der Ansprüche 1 bis 5, mit
einer Kraftstoffdruckerfassungseinrichtung (25) zum Erfassen des Drucks des durch die Kraftstoffzuführpumpe (3) abgegebenen Kraftstoffs; und
einer Kraftstoffabgabemengensteuereinrichtung (10) zum rückgekoppelten Steuern der Menge des durch die Kraftstoffzuführpumpe (3) abgegebenen Kraftstoffs, sodass der durch die Kraftstoffdruckerfassungseinrichtung (25) erfasste tatsächliche Kraftstoffdruck im Wesentlichen dem auf Grundlage der Betriebszustände der Brennkraftmaschine bestimmten Sollkraftkraftstoffdruck gleicht.

7. Kraftstoffeinspritzsystem gemäß Anspruch 2, wobei das Druckverringerungsventil (6) bei einem Öffnungsgrad geöffnet ist, der der Temperatur des in die Kraftstoffzuführpumpe (3) eingesaugten Kraftstoffs entspricht.

8. Kraftstoffeinspritzsystem gemäß einem der Ansprüche 1 bis 7, wobei die Rückführmengenerhöhungseinrichtung (2, 4, 6, 8) die Menge des durch den Kraftstoffrückführdurchlass (13, 14, 15, 16, 17) strömenden Kraftstoffs erhöht, wenn eine Drehzahl der Kraftmaschine niedriger als eine Leerlaufdrehzahl der Kraftmaschine ist.

## Revendications

1. Système d'injection de carburant, comprenant :
une pompe d'alimentation de carburant (3) qui pressurise le carburant en admission et décharge le carburant ;
un filtre à carburant (9) disposé dans un passage de carburant en amont de la pompe d'alimentation de carburant (3) pour éliminer les matières étrangères du carburant aspiré dans la pompe d'alimentation de carburant (3) ;
un passage de recyclage de carburant (13, 14, 15, 16, 17) pour recycler le carburant déchargé par la pompe d'alimentation de carburant (3) dans le filtre à carburant (9) ;
un système pour augmenter la quantité de recyclage (2, 4, 6, 8), permettant d'augmenter la quantité de carburant s'écoulant à travers le passage de recyclage de carburant (13, 14, 15, 16, 17) quand la température du carburant aspiré dans la pompe d'alimentation de carburant (3) est inférieure à une température prédéterminée, dans lequel le système pour augmenter la quantité de recyclage (2, 4, 6, 8) a une soupape (4, 6) commandée par un système de contrôle de la quantité de recyclage (10), afin de réduire la pression du carburant déchargé par la pompe d'alimentation de carburant (3), dans lequel la soupape (4, 6) du système pour augmenter la quantité de recyclage (2, 4, 6, 8) est ouverte pendant l'opération de démarrage du moteur ou l'opération de ralenti pour libérer le carburant sous haute pression dans le passage de recyclage de carburant (16), quand la température du carburant aspiré dans la pompe d'alimentation de carburant (3) est inférieure à une température prédéterminée ;
un système de détection de la température de carburant (24) pour détecter la température du carburant aspiré dans la pompe d'alimentation de carburant (3), dans lequel
le courant de commande à la soupape de réduction de pression (4, 6) ou le degré d'ouverture de la soupape (4, 6) est calculé conformément à la température du carburant détectée par le système de détection de la température de carburant (24) ;
dans lequel le système de contrôle de la quantité de recyclage (10) commande la soupape (4, 6) du système, afin d'augmenter la quantité de recyclage (2, 4, 6, 8) de sorte que la quantité de recyclage du carburant s'écoulant à travers le passage de recyclage de carburant (13, 14, 15, 16, 17) augmente quand la température de carburant détectée par le système de détection de la température de carburant (24) diminue.

2. Système d'injection de carburant selon la revendication 1, dans lequel
la soupape de réduction de pression (6) s'ouvre pour libérer le carburant sous haute pression dans le passage de recyclage de carburant (16), quand la température du carburant aspiré dans la pompe d'alimentation de carburant (3) est inférieure à la température prédéterminée.

3. Système d'injection de carburant selon la revendication 1 ou 2, dans lequel :
le système pour augmenter la quantité de recyclage (2, 4, 6, 8) a une soupape d'injection de carburant (2) permettant d'injecter le carburant dans un cylindre d'un moteur à combustion interne ; et
la soupape d'injection de carburant (2) libère le carburant sous haute pression dans la soupape d'injection de carburant (2) dans le passage de recyclage de carburant (14), quand la température du carburant aspiré dans la pompe d'alimentation de carburant (3) est inférieure à la température prédéterminée.

4. Système d'injection de carburant selon la revendication 3, comprenant en outre :
un premier système de commande de la soupape d'injection (10) pour appliquer un signal d'injection de carburant correspondant à une quantité d'injection cible, réglée sur la base des conditions de fonctionnement du moteur à combustion interne à la soupape d'injection de carburant (2, 4) ; et
un second système de commande de la soupape d'injection (10) pour appliquer un signal de désactivation de l'injection, qui est plus faible qu'un signal pour injecter le carburant dans le cylindre du moteur, à la soupape d'injection de carburant (2, 4) quand la température du carburant aspiré dans la pompe d'alimentation de carburant (3) est inférieure à la température prédéterminée.

5. Système d'injection de carburant selon l'une des revendications 1 à 4, dans lequel :
le passage de recyclage de carburant (13, 14, 15, 16, 17) a un premier passage de recyclage de carburant (13, 14, 15, 16) pour recycler le carburant déchargé par la pompe d'alimentation de carburant (3) dans un réservoir de carburant (5) et un second passage de recyclage de carburant (13, 14, 15, 16, 17) pour recycler le carburant déchargé par la pompe d'alimentation de carburant (3) dans le filtre à carburant (9) ; et
le système d'augmentation de la quantité de recyclage (2, 4, 6, 8) a une soupape de commutation du passage de recyclage (8) qui commute le passage de recyclage (13, 14, 15, 16, 17) du premier passage de recyclage de carburant (13, 14, 15, 16) au second passage de recyclage de carburant (13, 14, 15, 16, 17) quand la température du carburant passant à travers la soupape de commutation de passage de recyclage (8) est inférieure à une autre température prédéterminée.

6. Système d'injection de carburant selon l'une des revendications 1 à 5, comprenant :
un système de détection de pression de carburant (25) pour détecter la pression du carburant déchargé par la pompe d'alimentation de carburant (3) ; et
un système de contrôle de la quantité déchargée par la pompe (10) pour contrôler en retour la quantité de carburant déchargée par la pompe d'alimentation de carburant (3) de sorte que la pression effective de carburant détectée par le système de détection de
pression du carburant (25) soit généralement égale à la pression de carburant cible, déterminée sur la base des opérations de fonctionnement du moteur à combustion interne.

7. Système d'injection de carburant selon la revendication 2, dans lequel la soupape de réduction de pression (6) est ouverte selon un degré d'ouverture correspondant à la température du carburant aspiré dans la pompe d'alimentation de carburant (3).

8. Système d'injection de carburant selon l'une des revendications 1 à 7, dans lequel le système pour augmenter la quantité de recyclage (2, 4, 6, 8) augmente la quantité de carburant s'écoulant à travers le passage de recyclage de carburant (13, 14, 15, 16, 17) quand la vitesse de rotation du moteur est inférieure à une vitesse de rotation au ralenti du moteur.
